# FASCICULE DE BREVET EUROPEEN

(11) **EP 1 985 913 B1**
(45) Date de publication et mention de la délivrance du brevet: **15.10.2014**
(21) Numéro de dépôt: 08154488.4
(22) Date de dépôt: 14.04.2008
(51) Int. Cl.: F21S 8/12

(54) **Projecteur de véhicule automobile comportant un module optique muni d'un masque mobile**
Kraftfahrzeugscheinwerfer, der ein optisches Modul mit einer beweglichen Blende umfasst
Automobile headlight comprising an optical module equipped with a mobile shade

(30) Priorité: 25.04.2007 FR 0703041
(43) Date de publication de la demande: 29.10.2008
(73) Titulaire: VALEO VISION, 93012 Bobigny Cedex (FR)
(72) Inventeur: Ruat, Olivier, 49800 Trelaze (FR); Le Balpe, Christian, 49130 Sainte Gemmes sur Loire (FR)

(56) Documents cités:
- CH-A- 220 335
- FR-A- 2 387 416
- FR-A1- 2 882 589
- US-A- 1 037 402
- US-A- 4 458 303
- US-A- 4 760 499

## Description

L'invention se rapporte à un projecteur de véhicule automobile.

L'invention se rapporte plus particulièrement à un projecteur de véhicule automobile qui comporte :
- un boîtier qui est fermé longitudinalement vers l'avant par une glace de protection ;
- un module optique qui est agencé à l'intérieur du boîtier et qui est susceptible de produire un faisceau lumineux globalement longitudinal vers l'avant à travers la surface active d'un dioptre, tel que le dioptre formé par la surface avant d'une lentille.

Un tel module est décrit dans le document FR2882589.

Il est connu d'équiper les modules optiques appartenant à ce type de projecteur, et notamment les modules optiques de type elliptique, avec un cache permettant de réaliser une coupure du faisceau lumineux.

Les modules optiques elliptiques comportent généralement une source lumineuse qui est agencée dans un réflecteur concave de forme globalement ellipsoïdale de manière à produire, par réflexion, un faisceau lumineux longitudinal. Une lentille dont la face avant forme un dioptre, est interposée en avant de la source lumineuse, sur la trajectoire du faisceau lumineux, de manière à réfracter les rayons lumineux réfléchis pour former le faisceau lumineux.

Le cache de coupure est généralement interposé entre la source lumineuse et le dioptre du module optique.

Cependant, le cache de coupure ne permet pas de modifier l'apparence extérieure du dioptre lorsque le module optique est éteint, c'est-à-dire lorsque le module optique ne produit pas de faisceau lumineux.

De plus, le cache de coupure ne permet pas de protéger le dioptre. Ainsi, en cas d'endommagement de la glace de protection du projecteur, le dioptre est susceptible d'être sali, rayé ou abîmé par des poussières ou des débris.

Le document US4760499 montre un projecteur qui ne comporte qu'un seul masque mobile pour réfléchir la lumière vers le bas.

Pour résoudre notamment ces problèmes, l'invention propose un projecteur du type décrit précédemment, comportant un masque qui est monté mobile à l'intérieur du boîtier entre une position de masquage dans laquelle il est interposé longitudinalement entre le dioptre et la glace de manière à masquer au moins partiellement la surface active du dioptre et une position d'ouverture dans laquelle le masque est écarté transversalement de manière à permettre le passage de la totalité du faisceau lumineux émis à travers la surface active du dioptre, le masque comportant au moins deux volets qui sont mobiles l'un par rapport à l'autre.

Selon d'autres caractéristiques de l'invention :
- le masque est commandé dans sa position de masquage lorsque le module optique est éteint, et le masque est commandé vers sa position d'ouverture lorsque le module optique est allumé.
- le masque est délimité transversalement par un bord de masquage qui, en position de masquage, délimite une zone visible du dioptre ;
- le masque comporte au moins deux volets qui sont mobiles l'un par rapport à l'autre ;
- chaque volet est délimité transversalement par une portion du bord de masquage ;
- chaque volet est monté pivotant autour d'un axe vertical entre la position d'ouverture dans laquelle ils sont écartés transversalement l'un de l'autre et la position de masquage ;
- les déplacements des volets entre leur position de masquage et leur position d'ouverture sont commandés automatiquement par un moteur électrique ;
- le module optique est monté pivotant autour d'un axe vertical par rapport au boîtier, le pivotement du module optique étant commandé par ledit moteur électrique, chaque volet étant monté pivotant autour d'un axe vertical fixe par rapport au module optique, et les volets étant susceptibles d'être entraînés en pivotement par ledit moteur électrique par l'intermédiaire d'un dispositif débrayable d'entraînement ;
- le dispositif débrayable comporte un secteur denté qui s'étend dans un plan transversal longitudinal, et qui est monté mobile en translation par rapport au boîtier entre une position avant d'embrayage dans laquelle il est engrené avec un pignon de commande des volets pour que les volets et le module optique pivotent simultanément, et une position arrière de débrayage dans laquelle le secteur denté est écarté du pignon de commande des volets pour que le module optique soit susceptible de pivoter indépendamment des volets ;
- le module optique est monté pivotant autour d'un axe vertical entre une position angulaire extrême interne et une position angulaire extrême externe, un premier volet du masque étant monté fixe par rapport au boîtier et un deuxième volet du masque est monté fixe par rapport au dioptre de manière qu'en position extrême interne du module optique, les volets sont dans leur position de masquage, tandis qu'entre la position angulaire extrême externe et une position angulaire intermédiaire fonctionnelle les volets du masque sont dans leur position d'ouverture ;
- le masque est formé par un diaphragme à iris à ouverture réglable; ce mode de réalisation n'est pas couvert par les revendications;
- l'écran (38) est commandé :
   - dans sa position d'ouverture lorsque le module optique est allumé, pour obtenir une fonction d'éclairage intégral, et
   - vers sa position de masquage lorsque le module optique est allumé, pour obtenir une fonction d'éclairage tactique ;
- l'écran (38) est commandé :
   - dans sa position d'ouverture lorsque le module optique est allumé, pour obtenir une fonction d'éclairage intégral, et
   - vers sa position de masquage lorsque le module optique est allumé, pour obtenir une signature lumineuse délimitée par un bord de masquage délimitant transversalement le masque ;
- l'écran (38) est commandé :
   - dans sa position d'ouverture lorsque le module optique est allumé, pour obtenir une fonction d'éclairage intégral, et
   - vers sa position de masquage lorsque le module optique est allumé, pour obtenir une fonction d'éclairage de type « DRL ».

D'autres caractéristiques et avantages de l'invention apparaîtront à la lecture de la description détaillée qui va suivre pour la compréhension de laquelle on se reportera aux dessins annexés parmi lesquels :
- la figure 1 est une vue en perspective avec arrachement partiel de la glace du projecteur qui représente l'avant d'un véhicule automobile comportant un projecteur avant droit équipé d'un module optique comportant un dioptre ;
- la figure 2 est une vue en perspective qui représente le module optique de la figure 1 comportant un cache mobile réalisé selon un premier mode de réalisation de l'invention dans une position d'ouverture ;
- la figure 3 est une vue de face qui représente le dioptre du module optique de la figure 2 ;
- la figure 4 est une vue similaire à celle de la figure 2 qui représente le cache mobile dans une position de masquage ;
- les figures 5 à 9 sont des vues de dessus qui représentent le module optique de la figure 1 depuis sa position de masquage jusqu'à sa position d'ouverture par l'intermédiaire d'un dispositif débrayable d'entraînement ;
- la figure 10 représente le dioptre partiellement masqué par le masque dans sa position de masquage ;

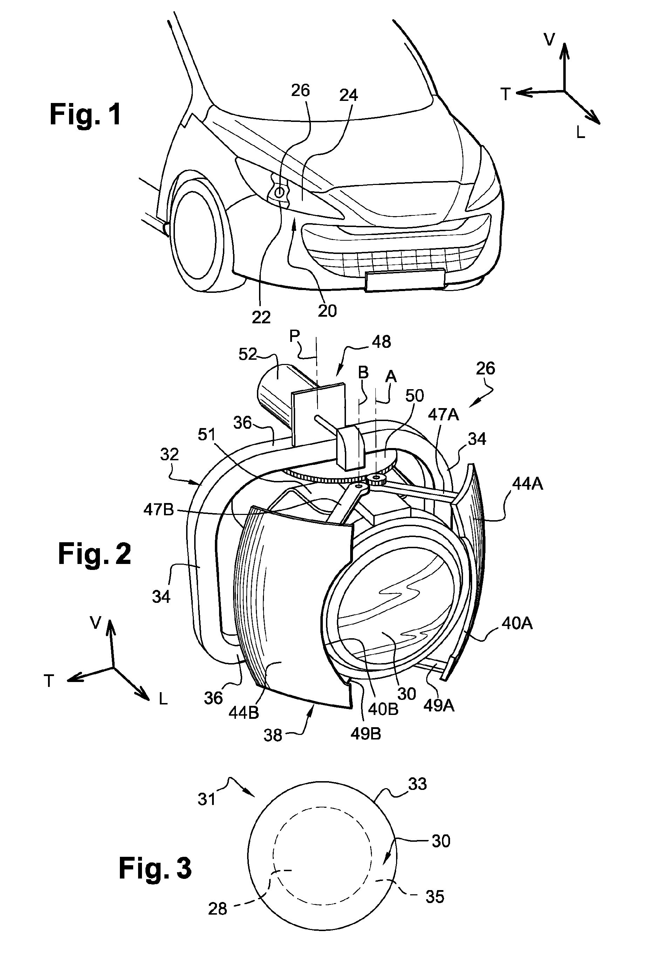

- les figures 1 1 , 13, 15 et 17 sont des vues en perspectives qui représentent le module optique muni d'un masque réalisé selon un deuxième mode de réalisation de l'invention dans plusieurs positions angulaires ;

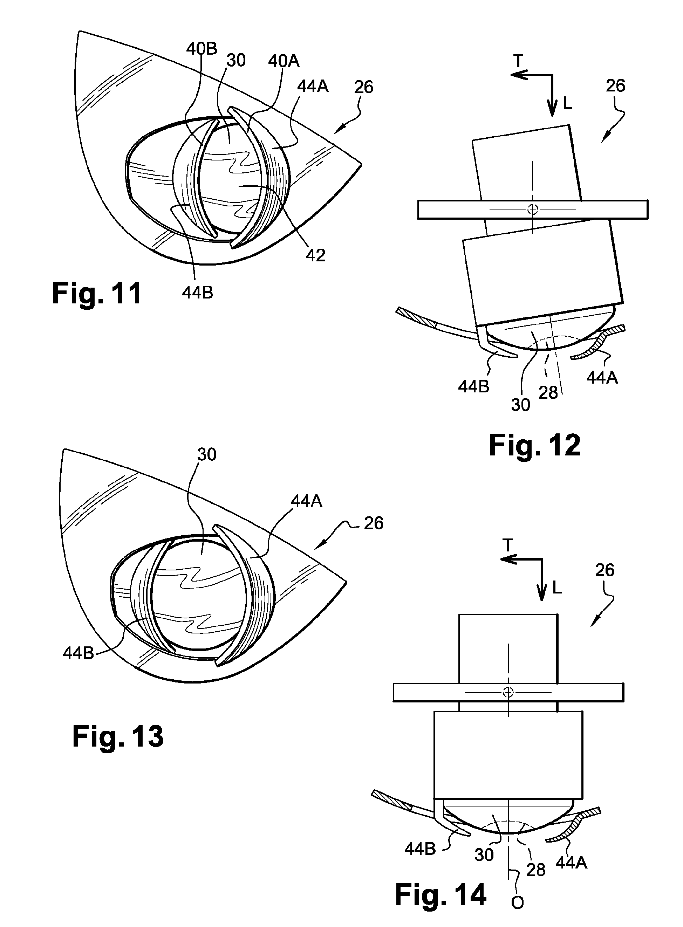

- les figures 12, 14, 16, 18 sont des vues de dessus correspondant respectivement au module optique représenté aux figures 11, 13, 15 et 17.

Dans la suite de la description et dans les revendications, on adoptera de manière non limitative et indépendamment de la direction de la gravité des orientations longitudinale orientée d'arrière vers l'avant, verticale orientée de bas en haut, et transversale orientée de gauche à droite, qui sont indiquées par le trièdre "L, V, T" des figures.

Dans la suite de la description, des éléments ayant des fonctions analogues, identiques ou similaires seront désignés par des mêmes numéros de référence.

On a représenté à la figure 1 un projecteur 20 avant droit de véhicule automobile qui comporte un boîtier 22 qui est fermé longitudinalement vers l'avant par une glace 24 transparente de protection.

Le projecteur 20 comporte au moins un module optique 26 qui est agencé à l'intérieur du boîtier 22 et qui est susceptible de produire un faisceau lumineux (non représenté) selon un axe optique "O" globalement longitudinal vers l'avant à travers une surface active 28 d'un dioptre 30.

Comme représenté plus en détail à la figure 2, le module optique 26 est du type elliptique, c'est-à-dire qu'il comporte une source lumineuse (non représentée) qui est agencée à l'intérieur d'un réflecteur arrière (non représenté) concave de forme ellipsoïdale ouvert vers l'avant. La source lumineuse est agencée à proximité d'un premier foyer du réflecteur de manière que les rayons lumineux émis par la source lumineuse en direction du réflecteur soient réfléchis vers un deuxième foyer situé longitudinalement à l'avant de la source lumineuse.

Le module optique 26 comporte aussi une lentille 31 qui présente sensiblement une forme de calotte sphérique d'axe coïncidant avec l'axe optique "O". La lentille 31 est agencée longitudinalement en avant du deuxième foyer du réflecteur sur la trajectoire des rayons lumineux réfléchis.

La lentille 31 comporte une face avant sensiblement convexe formant le dioptre 30. Le dioptre 30 est ainsi délimité dans un plan transversal vertical par un bord périphérique 33 de profil circulaire. Les rayons lumineux sont réfractés majoritairement par la surface active 28 du dioptre 30 de manière à former le faisceau lumineux d'éclairage.

On entend par surface active 28, la zone d'aire minimale nécessaire pour produire un faisceau lumineux d'éclairage réglementaire conforme aux normes en vigueur.

Comme représenté à la figure 3, la surface active 28 est ici située dans une zone centrale du dioptre 30 qui est délimitée en traits interrompus à la figure 3, la zone périphérique complémentaire restante étant une surface inactive 35 qui ne participe pas à produire le faisceau lumineux d'éclairage réglementaire.

Pour la suite de la description, on dira que le module optique 26 est allumé lorsqu'il produit le faisceau lumineux d'éclairage, et on dira qu'il est éteint lorsqu'il ne produit aucun faisceau lumineux d'éclairage.

Plus particulièrement, le module optique 26 est destiné à remplir une fonction d'éclairage de la route connue sous l'acronyme "DBL" ou "dynamic bending light", c'est-à-dire que le faisceau lumineux est susceptible de tourner autour d'un axe vertical lorsque le véhicule tourne dans un virage afin d'éclairer la portion de route située dans la courbe du virage.

A cet effet, comme représenté à la figure 2, le module optique 26 est monté pivotant autour d'un axe vertical "P" dans un portique fixe 32 par rapport au boîtier 22. Le portique 32 présente une forme de cadre comportant deux montant latéraux 34 verticaux et deux traverses transversales 36 supérieure et inférieure.

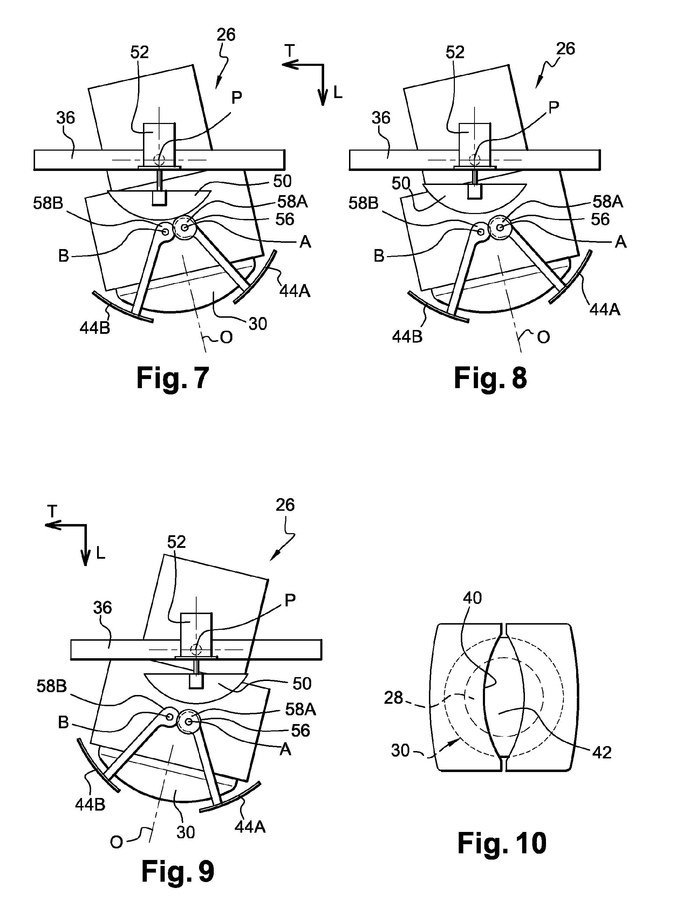

Le module optique 26 est ainsi susceptible de pivoter entre une position angulaire extrême interne comme représentée à la figure 8, c'est-à-dire vers la gauche pour un projecteur avant droit 20 ou vers la droite pour un projecteur avant gauche, et une position angulaire extrême externe comme représentée à la figure 9, c'est-à-dire vers la droite pour un projecteur avant droit 20 ou vers la gauche pour un projecteur avant gauche.

Dans le mode de réalisation représenté aux figures, les deux positions angulaires extrêmes sont symétriques par rapport à l'axe longitudinal "L" de part et d'autre d'une position angulaire médiante dans laquelle l'axe optique "O" est parallèle à l'axe longitudinal "L". Ainsi, lorsque le module optique 26 occupe une position angulaire extrême, l'axe optique "O" forme par exemple un angle de 15° dans un sens ou dans l'autre par rapport à l'axe longitudinal "L".

Le module optique 26 est plus particulièrement pivotant dans un plage angulaire fonctionnelle qui est comprise entre la position angulaire extrême externe et une position angulaire interne intermédiaire fonctionnelle dans laquelle l'axe optique "O" du module optique 26 forme par exemple un angle de 8° vers la gauche par rapport à l'axe longitudinal "L".

Le pivotement du module optique 26 est commandé par un moteur électrique (non représenté).

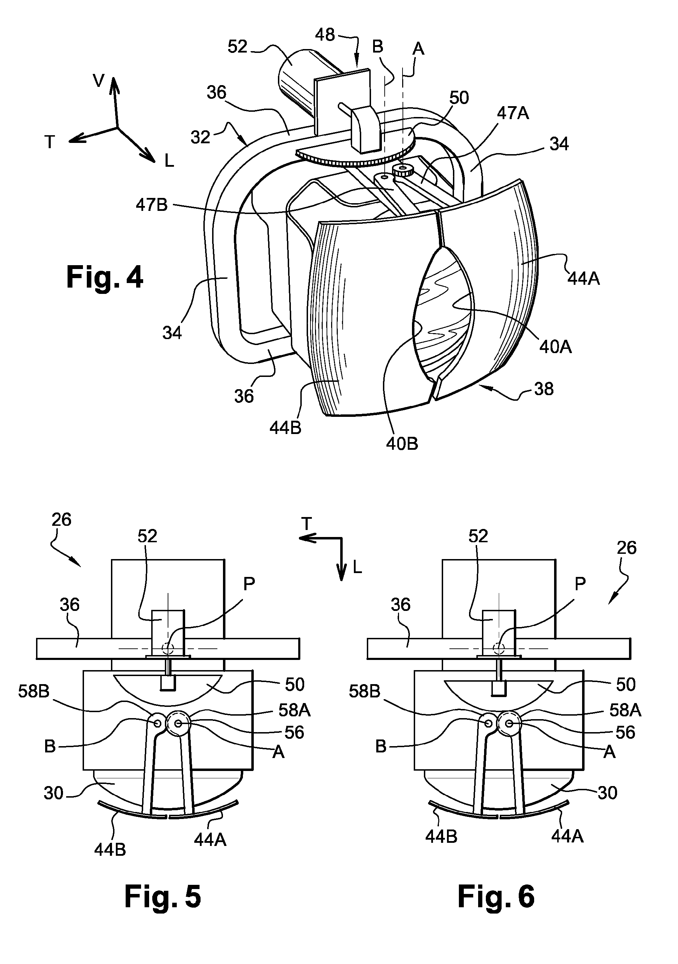

Selon les enseignements de l'invention le module optique 26 comporte un masque 38 qui est monté mobile à l'intérieur du boîtier 22 entre une position de masquage dans laquelle il est interposé longitudinalement entre le dioptre 30 et la glace 24 de manière à masquer au moins partiellement la surface active 28 du dioptre 30, comme représenté aux figures 4 et 10, et une position d'ouverture dans laquelle le masque 38 est écarté transversalement de manière à permettre le passage de la totalité du faisceau lumineux réglementaire émis à travers la surface active 28 du dioptre 30, comme représenté à la figure 2.

A cet effet, le masque 38 est commandé dans sa position de masquage lorsque le module optique 26 est éteint, c'est-à-dire lorsqu'il ne produit pas de faisceau lumineux, et le masque 38 est commandé vers sa position d'ouverture lorsque le module optique 26 est allumé, c'est-à-dire lorsqu'il produit le faisceau lumineux d'éclairage.

Comme représenté aux figures 4 et 10, le masque 38 comporte un jour profilé qui est délimité transversalement par un bord 40 de masquage qui, en position de masquage, délimite une zone visible 42 du dioptre 30. La zone visible 42 a ici un profil oblong d'axe vertical.

Selon une variante non représentée de l'invention, la zone visible 42 peut présenter un profil de fantaisie quelconque.

Dans le premier mode de réalisation représenté aux figures 2 à 10, le masque 38 comporte deux volets gauche 44A et droit 44B qui sont mobiles transversalement l'un par rapport à l'autre.

Dans la position de masquage qui est représentée à la figure 4, chaque volet 44A, 44B s'étend dans un plan vertical transversal. Chaque volet 44A, 44B comporte une face avant.

Chaque volet 44A, 44B est délimité transversalement par un bord de masquage 40A, 40B. Le bord de masquage 40A, 40B comporte un profil qui, en position de masquage, délimite transversalement d'un côté la zone visible 42 du dioptre 30. Plus précisément, le volet gauche 44A est délimité transversalement vers la droite par le bord de masquage 40A profilé associé, tandis que le volet droit 44B est délimité transversalement vers la gauche par le bord de masquage 40B profilé associé.

Chaque volet 44A, 44B est monté pivotant autour d'un axe vertical "A", "B" associé fixe par rapport au boîtier 22 entre la position d'ouverture dans laquelle ils sont écartés transversalement l'un de l'autre, comme illustré à la figure 2, et la position de masquage, comme illustré à la figure 4.

A cet effet, chaque volet 44A, 44B comporte un bras 47A, 47B supérieur et un bras inférieur 49A, 49B de même longueur qui s'étendent globalement longitudinalement vers l'arrière depuis la face arrière du volet 44A, 44B jusqu'à une extrémité libre. L'extrémité libre de chaque bras est monté pivotante autour de l'axe vertical associé "A, B" sur un support 51 qui est solidaire en pivotement du module optique 26.

Les axes de pivotement "A" et "B" sont parallèles et agencés à proximité l'un de l'autre.

Les déplacements des volets 44A, 44B entre leur position de masquage et leur position d'ouverture sont commandés automatiquement par un dispositif automatique d'ouverture qui comporte ici un moteur électrique (non représenté).

Dans le mode de réalisation représenté aux figures 2 à 10, les volets 44A, 44B sont plus particulièrement susceptibles d'être entraînés en pivotement par le moteur électrique qui commande le pivotement du module optique 26 par l'intermédiaire d'un dispositif débrayable d'entraînement 48.

Le dispositif débrayable d'entraînement 48 comporte un secteur denté 50 qui s'étend dans un plan transversal longitudinal. Le secteur denté 50 est plus particulièrement orienté vers l'avant et il est symétrique par rapport à un axe médian longitudinal. Le secteur denté 50 présente un bord denté en arc de cercle qui est coaxial à l'axe "P" de pivotement du module optique 26.

Le secteur denté 50 est monté mobile en translation par rapport au boîtier 22 entre une position arrière de débrayage, comme illustré à la figure 5, et une position avant d'embrayage, comme illustré à la figure 6. Les déplacements en translation du secteur denté 50 sont commandés par un électro-aimant 52 par l'intermédiaire d'une tige longitudinale de commande 54. L'électro-aimant 52 est fixé à la traverse supérieure 36 du portique 32.

L'extrémité libre du bras supérieur 47A du volet gauche 44A comporte un pignon de commande 56 qui est coaxial à l'axe de pivotement "A" du volet gauche 44A et qui est solidaire en pivotement du volet gauche 44A.

Ainsi, lorsque le secteur denté 50 est commandé dans sa position avant d'embrayage, le pignon de commande 56 des volets 44A, 44B est engrené avec le secteur denté 50 fixe pour que les volets 44A, 44B et le module optique 26 pivotent simultanément, et lorsque le secteur denté 50 est commandé dans sa position arrière de débrayage, le secteur denté 50 est écarté longitudinalement du pignon de commande 56 des volets 44A, 44B de manière à ne plus être engrené pour que le module optique 26 soit susceptible de pivoter indépendamment des volets 44A, 44B.

Pour transmettre le mouvement de pivotement du volet gauche 44A au volet droit 44B, l'extrémité libre de chaque bras supérieur 47A, 47B est conformé en une roue dentée 58A, 58B qui est engrenée avec la roue dentée 58B, 58A formée par l'extrémité libre de l'autre bras supérieur 47B, 47A.

Pour décrire le fonctionnement d'un tel masque 38, on se réfère aux figures 5 à 9.

Comme représenté à la figure 5, lorsque le module optique 26 est éteint, il occupe sa position angulaire médiante. Le masque 38 est dans sa position de masquage, et le secteur denté 50 est dans sa position arrière de débrayage.

Un observateur extérieur ne peut donc voir que la zone visible 42 profilée du dioptre 30, comme représenté à la figure 10.

Lorsque le module optique 26 est allumé, l'électro-aimant 52 commande le coulissement du secteur denté 50 vers sa position avant d'embrayage, comme illustré à la figure 6.

Puis, comme représenté à la figure 7, le module optique 26 est commandé en pivotement par le moteur électrique vers sa position angulaire extrême interne, dans un sens anti-horaire en se reportant à la figure 7. Lors de ce pivotement, le pignon de commande 56 roule sur le secteur denté 50 de manière à provoquer le pivotement du volet gauche 44A vers sa position d'ouverture dans un sens anti-horaire.

Simultanément, le pivotement du volet gauche 44A entraîne le pivotement dans un sens horaire du volet droit 44B par l'intermédiaire des roues dentées 58A et 58B.

Dans l'exemple représenté aux figures 5 à 9, le pignon de commande 56 et le secteur denté 50 sont conçus de manière que la position d'ouverture des volets 44A, 44B coïncide avec la position angulaire extrême interne du module optique 26. Ainsi, le pignon de commande 56 parcourt ici un arc de 15° du secteur denté 50 pour permettre aux volets 44A, 44B de pivoter depuis leur position de masquage jusqu'à leur position d'ouverture.

Selon une variante non représentée de l'invention, le pignon de commande 56 et le secteur denté 50 sont conçus de manière que la position d'ouverture des volets 44A, 44B coïncide avec une position angulaire intermédiaire d'ouverture entre la position angulaire médiante et la position angulaire extrême interne.

Lorsque les volets 44A, 44B sont dans leur position d'ouverture, le secteur denté 50 est commandé par l'électro-aimant 52 vers sa position arrière débrayée, comme représenté à la figure 8.

Les volets 44A, 44B restent ainsi dans leur position d'ouverture par rapport au dioptre 30 tant que le module optique 26 est allumé, quelle que soit la position angulaire du module optique 26 comme représenté aux figures 8 et 9.

Le module optique 26 allumé est alors susceptible d'émettre le faisceau lumineux d'éclairage réglementaire sans que celui-ci ne soit coupé par le bord de masquage 40A, 40B des volets 44A, 44B.

Lorsque le module optique 26 est éteint, le module optique 26 est de nouveau commandé dans sa position angulaire extrême interne, puis le secteur denté 50 est commandé vers sa position avant d'embrayage par l'électro-aimant 52. Le module optique 26 est alors commandé vers sa position angulaire médiante, en entraînant la rotation du pignon de commande 56. Les volets 44A, 44B sont alors pivotés vers leur position fermée par le moteur électrique.

Selon une variante non représentée de l'invention, le dispositif d'ouverture des volets 44A, 44B est entraîné par un deuxième moteur qui est indépendant du moteur électrique de pivotement du module optique 26, par exemple le deuxième moteur électrique entraîne le pignon de commande 56 indépendamment de la position angulaire du module optique 26.

Selon une autre variante non représentée de l'invention, le dispositif d'ouverture des volets 44A, 44B peut comporter d'autres moyens d'entraînement en pivotement des volets 44A, 44B, par exemple des systèmes de cames ou de crémaillères.

Le premier mode de réalisation de l'invention a été décrit en référence à un module optique 26 pivotant du type "DBL". On comprendra que l'invention est aussi applicable à des modules optiques d'éclairage fixes ou à des modules d'éclairage munis de moyens de correction dynamique en site de leur orientation pour s'adapter aux irrégularités de la route.

On a représenté aux figures 11 à 18 un deuxième mode de réalisation de l'invention.

Ce deuxième mode de réalisation est particulièrement adapté à un module optique 26 qui est monté pivotant autour d'un axe vertical entre sa position angulaire extrême interne et sa position angulaire extrême externe.

Dans ce deuxième mode de réalisation de l'invention, le masque 38 comporte encore deux volets 44A, 44B, et le masque 38 présente encore un jour profilé.

Cependant, le volet gauche 44A, c'est-à-dire interne, du masque 38 est monté fixe par rapport au boîtier 22 et le volet droit 44B, c'est-à-dire externe, du masque 38 est monté fixe par rapport au dioptre 30. Ainsi, les volets 44A, 44B sont mobiles transversalement l'un par rapport à l'autre.

Le volet droit 44B qui est mobile par rapport au boîtier 22 forme donc une paupière qui est susceptible de se rapprocher du volet gauche 44A.

Le volet gauche 44A est plus particulièrement porté par un couvercle fixé au boîtier 22 tandis que le volet droit 44B est porté par une coiffe qui est fixé sur le module optique 26. Un exemple d'un montage d'un module optique comportant une coiffe et un couvercle est décrit plus en détail dans le document FR-B-2.828.851.

Le volet droit 44B ne masque pas la surface active 28 du dioptre 30. Cependant, le bord de masquage 40B du volet droit 44B permet de masquer une portion de surface inactive 35 transversale périphérique du dioptre 30, conférant ainsi une apparence extérieure non circulaire au bord périphérique 33 du dioptre 30.

Comme représenté aux figure 11 et 12, en position extrême interne du module optique 26, les volets 44A, 44B sont dans leur position de masquage. Seule la zone visible 42 du dioptre 30 est exposée.

Comme illustré à la figure 12, une partie de la surface active 28 du dioptre 30, représentée en traits interrompus, est alors masquée par le volet gauche 44A. Le profil de la zone visible 42 est formé conjointement par les bords de masquage 40A, 40B des volets gauche 44A et droit 44B.

Lorsque le module optique 26 est allumé, le module optique 26 est commandé par le moteur électrique dans sa position angulaire médiante, comme illustré à la figure 13. Dans cette position angulaire, une portion gauche de la surface inactive 35 périphérique est masquée par le volet gauche 44A. Comme représenté à la figure 14, le masque 38 est cependant dans une position d'ouverture car la surface active 28 du dioptre 30 est entièrement dégagée de manière à permettre à la totalité du faisceau lumineux de traverser le dioptre 30 sans être coupé.

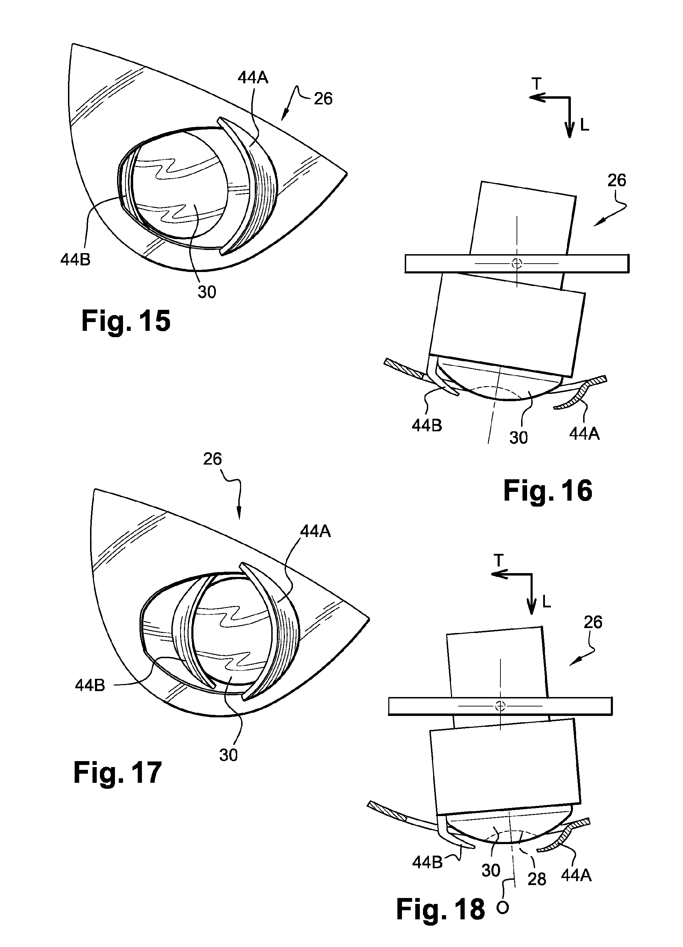

Lorsque le module optique 26 est commandé vers sa position angulaire extrême externe, comme représenté aux figures 15 et 16, le dioptre 30 n'est plus du tout caché par le volet gauche 44A, seul le volet droit 44B masque une portion droite de la surface inactive 35 du dioptre 30.

Lorsque le module optique 26 est commandé vers sa position angulaire intermédiaire fonctionnelle, comme illustré à la figure 17, une portion gauche de la surface inactive 35 est masquée par le volet gauche 44A. Le masque 38 est cependant dans une position d'ouverture car la surface active 28 du dioptre 30 est entièrement dégagée de manière à permettre à la totalité du faisceau lumineux utile de traverser le dioptre 30 sans être coupé, comme illustré à la figure 18. Par faisceaux lumineux utile, on entend la partie du faisceau conférant l'intensité lumineuse pour réaliser la fonction d'éclairage par le module optique 26.

Puis, lorsque le module optique 26 est éteint, il est commandé vers sa position angulaire extrême interne de manière que les volets 44A, 44B soient dans leur position de masquage.

Selon une variante non représentée de l'invention qui est applicable à tous les modes de réalisation décrits précédemment, le masque 38 ne comporte pas de jour, et, dans sa position de masquage, il masque totalement le dioptre 30. A cet effet, les bords de masquage 40A, 40B des volets 44A, 44B présentent des profils complémentaires.

Selon un troisième mode de réalisation non représenté de l'invention, et non couvert par les revendications, le masque est formé par un diaphragme à iris à ouverture réglable de structure similaire à ceux utilisés dans les appareils photographiques. L'ouverture du diaphragme est alors susceptible d'être commandée entre une position d'ouverture dans laquelle il laisse passer la totalité du faisceau lumineux d'éclairage, et une position de masquage dans laquelle le diaphragme masque au moins partiellement le surface active 28 du dioptre 30.

Selon un quatrième mode de réalisation non représenté de l'invention, le masque comporte un volet haut et un volet bas, mobiles verticalement. Chaque volet est monté préférentiellement pivotant autour d'un axe horizontal, et non vertical comme illustré en figures 2 et 4. Plus précisément, le volet bas est délimité transversalement vers le haut par un bord de masquage profilé associé, tandis que le volet haut est délimité transversalement vers le bas par le bord de masquage profilé associé.

Grâce au projecteur 20 réalisé selon les enseignements de l'invention, il est possible de donner une nouvelle apparence extérieure non circulaire au profil de la zone visible 42 du dioptre 30 lorsque le module optique 26 est éteint. Ceci permet notamment de conférer au véhicule automobile un aspect extérieur original tout en respectant les normes qui réglementent les faisceaux lumineux d'éclairage.

Le jour 42 réservé dans le masque 38 permet avantageusement de modifier le profil apparent du dioptre 30 de manière simple et peu onéreuse en utilisant toujours des dioptres de forme standard.

Selon un cinquième mode de réalisation, le module optique peut également être utilisé lorsque l'on veut obtenir un éclairage minimal au travers du jour profilé du masque, lorsque le masque est en position de masquage. Les bords d'ouverture de l'écran sont étudiés pour fournir l'ouverture minimale requise pour obtenir l'éclairage minimal. Lorsque le masque est en position d'ouverture, le module optique est également allumé et génère alors un éclairage intégral tel qu'un éclairage pour une fonction code ou route. Le terme éclairage intégral signifie que la totalité du faisceau lumineux émis au travers de la surface utile de la lentille est émis par le module optique, par opposition à la situation où la lentille est masquée au moins partiellement.

Selon un exemple de réalisation de ce cinquième mode de réalisation, lorsque le module optique est allumé dans la position de masquage, les bords de masquage délimitant transversalement le masque permettent d'obtenir une signature lumineuse dont le contour correspond à ces bords. Selon la forme des bords, on peut obtenir différentes figures, tel qu'un logo ou une figure.

Selon un autre exemple de réalisation de ce cinquième mode de réalisation, le jour profilé peut avoir une taille juste suffisante pour laisser passer un faisceau lumineux ayant juste l'intensité lumineuse minimum pour que le conducteur puisse savoir où il roule, ceci afin d'éviter d'être repéré. Il s'agit par exemple d'un éclairage tactique, connu sous le nom d'éclairage de type "black-out", utilisé notamment en opération par les militaires.

Selon encore un autre exemple de réalisation de ce cinquième mode de réalisation, le jour profilé peut avoir la taille juste suffisante pour laisser passer un faisceau lumineux ayant juste l'intensité lumineuse minimum requise pour réaliser un éclairage diurne, de type « DRL » (pour Daytime Running Light en langue anglaise).

De plus, le masque 38 est aussi susceptible de protéger le dioptre 30 au cas où la glace 24 de protection serait brisée.

La face avant du masque 38 est aussi susceptible de servir de support pour des signes esthétiques ou fonctionnels.

## Revendications

1. Projecteur (10) de véhicule automobile qui comporte :
- un boîtier (22) qui est fermé longitudinalement vers l'avant par une glace de protection (24) ;
- un module optique (26) qui est agencé à l'intérieur du boîtier (22) et qui est susceptible de produire un faisceau lumineux globalement longitudinal vers l'avant à travers une surface active (28) d'un dioptre (30) ;
**caractérisé en ce qu'**il comporte un masque (38) qui est monté mobile à l'intérieur du boîtier (22) entre une position de masquage dans laquelle il est interposé longitudinalement entre le dioptre (30) et la glace (24) de manière à masquer au moins partiellement la surface active (28) du dioptre (30) et une position d'ouverture dans laquelle le masque (38) est écarté transversalement de manière à permettre le passage de la totalité du faisceau lumineux émis à travers la surface active (28) du dioptre (30), et **en ce que** le masque (38) comporte au moins deux volets (44A, 44B) qui sont mobiles l'un par rapport à l'autre.

2. Projecteur (10) selon la revendication précédente, **caractérisé en ce que** le masque (38) est commandé dans sa position de masquage lorsque le module optique (26) est éteint, et le masque (38) est commandé vers sa position d'ouverture lorsque le module optique (26) est allumé.

3. Projecteur (10) selon la revendication 1 ou 2, **caractérisé en ce que** le masque (38) est délimité transversalement par un bord de masquage (40) qui, en position de masquage, délimite une zone visible (42) du dioptre (30).

4. Projecteur (10) selon l'une des revendications précédentes, **caractérisé en ce que** chaque volet (44A, 44B) est délimité transversalement par une portion (40A, 40B) du bord de masquage (40) qui, en position de masquage, délimite une zone visible (42) du dioptre (30).

5. Projecteur (10) selon l'une quelconque des revendications précédentes, **caractérisé en ce que** chaque volet (44A, 44B) est monté pivotant autour d'un axe vertical (A, B) entre la position d'ouverture dans laquelle ils sont écartés transversalement l'un de l'autre et la position de masquage.

6. Projecteur (10) selon la revendication précédente, **caractérisé en ce que** les déplacements des volets (44A, 44B) entre leur position de masquage et leur position d'ouverture sont commandés automatiquement par un moteur électrique.

7. Projecteur (10) selon la revendication précédente, **caractérisé en ce que** le module optique (26) est monté pivotant autour d'un axe vertical (P) par rapport au boîtier (22), le pivotement du module optique (26) étant commandé par ledit moteur électrique, **en ce que** chaque volet (44A, 44B) est monté pivotant autour d'un axe vertical fixe (A, B) par rapport au module optique (26), et **en ce que** les volets (44A, 44B) sont susceptibles d'être entraînés en pivotement par ledit moteur électrique par l'intermédiaire d'un dispositif débrayable d'entraînement (48).

8. Projecteur (10) selon la revendication précédente, **caractérisé en ce que** le dispositif débrayable (48) comporte un secteur denté (50) qui s'étend dans un plan transversal longitudinal, et qui est monté mobile en translation par rapport au boîtier (22) entre une position avant d'embrayage dans laquelle il est engrené avec un pignon de commande (56) des volets (44A, 44B) pour que les volets (44A, 44B) et le module optique (26) pivotent simultanément, et une position arrière de débrayage dans laquelle le secteur denté (50) est écarté du pignon de commande des volets (44A, 44B) pour que le module optique (26) soit susceptible de pivoter indépendamment des volets (44A, 44B).

9. Projecteur (10) selon l'une quelconque des revendications 1 à 3, **caractérisé en ce que** le module optique (26) est monté pivotant autour d'un axe vertical (P) entre une position angulaire extrême interne et une position angulaire extrême externe, et **en ce qu'**un premier volet (44A) du masque (38) est monté fixe par rapport au boîtier (22) et un deuxième volet (44B) du masque (38) est monté fixe par rapport au dioptre (38) de manière qu'en position extrême interne du module optique (26), les volets (44A, 44B) sont dans leur position de masquage, tandis qu'entre la position angulaire extrême externe et une position angulaire intermédiaire fonctionnelle les volets (44A, 44B) du masque (38) sont dans leur position d'ouverture.

10. Projecteur (10) selon l'une quelconque des revendications précédentes, **caractérisé en ce que** l'écran (38) est commandé :
- dans sa position d'ouverture lorsque le module optique (26) est allumé, pour obtenir une fonction d'éclairage intégral, et
- vers sa position de masquage lorsque le module optique (26) est allumé, pour obtenir une fonction d'éclairage tactique.

11. Projecteur (10) selon l'une quelconque des revendications 1 à 9, **caractérisé en ce que** l'écran (38) est commandé :
- dans sa position d'ouverture lorsque le module optique (26) est allumé, pour obtenir une fonction d'éclairage intégral, et
- vers sa position de masquage lorsque le module optique (26) est allumé, pour obtenir une signature lumineuse délimitée par un bord de masquage (40) délimitant transversalement le masque (38).

12. Projecteur (10) selon l'une quelconque des revendications 1 à 9, **caractérisé en ce que** l'écran (38) est commandé :
- dans sa position d'ouverture lorsque le module optique (26) est allumé, pour obtenir une fonction d'éclairage intégral, et
- vers sa position de masquage lorsque le module optique (26) est allumé, pour obtenir une fonction d'éclairage de type « DRL ».

## Patentansprüche

1. Kraftfahrzeugscheinwerfer (10) mit:
- einem Gehäuse (22), das in Längsrichtung nach vorne durch eine Schutzscheibe (24) geschlossen ist;
- einem Optikmodul (26), das innen im Gehäuse (22) angeordnet ist und ein allgemein längs gerichtetes Lichtbündel nach vorne durch eine aktive Oberfläche (28) eines Diopters (30) hindurch zu erzeugen vermag;
**dadurch gekennzeichnet, dass** er eine Blende (38) umfasst, die innen im Gehäuse (22) zwischen einer Abdeckstellung, in der sie in Längsrichtung zwischen dem Diopter (30) und der Scheibe (24) derart eingefügt ist, dass sie die aktive Oberfläche (28) des Diopters (30) wenigstens teilweise verdeckt, und einer Offenstellung beweglich angebracht ist, in der die Blende (38) in Querrichtung derart weggerückt ist, dass der Durchlass des gesamten emittierten Lichtbündels durch die aktive Oberfläche (28) des Diopters (30) hindurch möglich ist, und dass die Blende (38) wenigstens zwei Klappen (44A, 44B) umfasst, die bezüglich einander beweglich sind.

2. Scheinwerfer (10) nach dem vorhergehenden Anspruch,
**dadurch gekennzeichnet, dass** die Blende (38) in ihre Abdeckstellung gebracht wird, wenn das Optikmodul (26) ausgeschaltet ist, und die Blende (38) in ihre Offenstellung gebracht wird, wenn das Optikmodul (26) eingeschaltet ist.

3. Scheinwerfer (10) nach Anspruch 1 oder 2,
**dadurch gekennzeichnet, dass** die Blende (38) in Querrichtung durch einen Blendenrand (40) begrenzt ist, der in der Abdeckstellung einen sichtbaren Bereich (42) des Diopters (30) umgrenzt.

4. Scheinwerfer (10) nach einem der vorhergehenden Ansprüche,
**dadurch gekennzeichnet, dass** jede Klappe (44A, 44B) in Querrichtung durch einen Abschnitt (40A, 40B) des Blendenrands (40) begrenzt ist, der in der Abdeckstellung einen sichtbaren Bereich (42) des Diopters (30) umgrenzt.

5. Scheinwerfer (10) nach einem der vorhergehenden Ansprüche,
**dadurch gekennzeichnet, dass** jede Klappe (44A, 44B) um eine senkrechte Achse (A, B) zwischen der Offenstellung, in der sie in Querrichtung voneinander abgerückt sind, und der Abdeckstellung schwenkbar angebracht ist.

6. Scheinwerfer (10) nach dem vorhergehenden Anspruch,
**dadurch gekennzeichnet, dass** die Verlagerungen der Klappen (44A, 44B) zwischen ihrer Abdeckstellung und ihrer Offenstellung durch einen Elektromotor automatisch gesteuert werden.

7. Scheinwerfer (10) nach dem vorhergehenden Anspruch,
**dadurch gekennzeichnet, dass** das Optikmodul (26) bezüglich des Gehäuses (22) um eine senkrechte Achse (P) schwenkbar angebracht ist, wobei das Schwenken des Optikmoduls (26) durch den Elektromotor gesteuert ist, dass jede Klappe (44A, 44B) bezüglich des Optikmoduls (26) um eine feststehende senkrechte Achse (A, B) schwenkbar angebracht ist, und dass die Klappen (44A, 44B) durch den Elektromotor mittels einer ausrückbaren Antriebsvorrichtung (48) in eine Schwenkbewegung versetzbar sind.

8. Scheinwerfer (10) nach dem vorhergehenden Anspruch,
**dadurch gekennzeichnet, dass** die ausrückbare Vorrichtung (48) ein Zahnsegment (50) aufweist, das sich in einer längs verlaufenden Querebene erstreckt und bezüglich des Gehäuses (22) translatorisch beweglich montiert ist zwischen einer vorderen Einrückstellung, in der es mit einem Steuerritzel (56) der Klappen (44A, 44B) in Eingriff ist, damit die Klappen (44A, 44B) und das Optikmodul (26) gleichzeitig schwenken, und einer hinteren Ausrückstellung, in der das Zahnsegment (50) von dem Steuerritzel der Klappen (44A, 44B) weggerückt ist, damit das Optikmodul (26) unabhängig von den Klappen (44A, 44B) schwenken kann.

9. Scheinwerfer (10) nach einem der Ansprüche 1 bis 3,
**dadurch gekennzeichnet, dass** das Optikmodul (26) zwischen einer inneren Winkelendstellung und einer äußeren Winkelendstellung um eine senkrechte Achse (P) schwenkbar angebracht ist, und dass eine erste Klappe (44A) der Blende (38) bezüglich des Gehäuses (22) feststehend montiert ist und eine zweite Klappe (44B) der Blende (38) bezüglich des Diopters (38) feststehend montiert ist, derart, dass sich die Klappen (44A, 44B) in der inneren Endstellung des Optikmoduls (26) in ihrer Abdeckstellung befinden, während sich die Klappen (44A, 44B) der Blende (38) zwischen der äußeren Winkelendstellung und einer funktionalen Winkelzwischenstellung in ihrer Offenstellung befinden.

10. Scheinwerfer (10) nach einem der vorhergehenden Ansprüche,
**dadurch gekennzeichnet, dass** die Blende (38)
- in ihre Offenstellung gebracht wird, wenn das Optikmodul (26) eingeschaltet ist, um eine volle Lichtfunktion zu erzielen, und
- in ihre Abdeckstellung gebracht wird, wenn das Optikmodul (26) eingeschaltet ist, um eine taktische Lichtfunktion zu erzielen.

11. Scheinwerfer (10) nach einem der Ansprüche 1 bis 9,
**dadurch gekennzeichnet, dass** die Blende (38)
- in ihre Offenstellung gebracht wird, wenn das Optikmodul (26) eingeschaltet ist, um eine volle Lichtfunktion zu erzielen, und
- in ihre Abdeckstellung gebracht wird, wenn das Optikmodul (26) eingeschaltet ist, um eine Beleuchtungscharakteristik zu erzielen, die durch einen die Blende (38) in Querrichtung begrenzenden Blendenrand (40) begrenzt ist.

12. Scheinwerfer (10) nach einem der Ansprüche 1 bis 9,
**dadurch gekennzeichnet, dass** die Blende (38)
- in ihre Offenstellung gebracht wird, wenn das Optikmodul (26) eingeschaltet ist, um eine volle Lichtfunktion zu erzielen, und
- in ihre Abdeckstellung gebracht wird, wenn das Optikmodul (26) eingeschaltet ist, um eine Lichtfunktion vom Typ Tagfahrlicht zu erzielen.

## Claims

1. Motor vehicle headlight (10) which comprises:
- a housing (22) which is closed longitudinally at the front by protective glass (24);
- an optical module (26) which is provided inside the housing (22), and can produce a globally longitudinal light beam at the front through an active surface (28) of a dioptre (30);
**characterised in that** it comprises a shield (38) which is fitted such as to be mobile inside the housing (22), between a shielding position in which it is interposed longitudinally between the dioptre (30) and the glass (24), such as to shield the active surface (28) of the dioptre (30) at least partially, and an open position in which the shield (38) is spaced transversely, such as to permit passage of all of the light beam emitted through the active surface (28) of the dioptre (30), and **in that** the shield (38) comprises at least two shutters (44A, 44B) which are mobile relative to one another.

2. Headlight (10) according to the preceding claim, **characterised in that** the shield (38) is driven into its shielding position when the optical module (26) is switched off, and the shield (38) is driven to its open position when the optical module (26) is switched on.

3. Headlight (10) according to claim 1 or 2, **characterised in that** the shield (38) is delimited transversely by a shielding edge (40) which, in the shielding position, delimits a visible area (42) of the dioptre (30).

4. Headlight (10) according to one of the preceding claims, **characterised in that** each shutter (44A, 44B) is delimited transversely by a portion (40A, 40B) of the shielding edge (40) which, in the shielding position, delimits a visible area (42) of the dioptre (30).

5. Headlight (10) according to any one of the preceding claims, **characterised in that** each shutter (44A, 44B) is fitted such as to pivot around a vertical axis (A, B), between the open position in which the shutters are spaced transversely from one another, and the shielding position.

6. Headlight (10) according to the preceding claim, **characterised in that** the displacements of the shutters (44A, 44B) between their shielding position and their open position are controlled automatically by an electric motor.

7. Headlight (10) according to the preceding claim, **characterised in that** the optical module (26) is fitted such as to pivot around a vertical axis (P) relative to the housing (22), with the pivoting of the optical module (26) being controlled by the said electric motor, **in that** each shutter (44A, 44B) is fitted such as to pivot around a vertical axis (A, B) which is fixed relative to the optical module (26), and **in that** the shutters (44A, 44B) can be pivoted by the said electric motor by means of a drive device (48) which can be disengaged.

8. Headlight (10) according to the preceding claim, **characterised in that** the device (48) which can be disengaged comprises a toothed sector (50) which extends on a longitudinal transverse plane, and is fitted such as to be mobile in translation relative to the housing (22), between a front engaged position, in which it is engaged with a pinion (56) for control of the shutters (44A, 44B), so that the shutters (44A, 44B) and the optical module (26) pivot simultaneously, and a rear disengaged position in which the toothed sector (50) is spaced from the pinion for control of the shutters (44A, 44B), so that the optical module (26) can pivot independently from the shutters (44A, 44B).

9. Headlight (10) according to any one of claims 1 to 3, **characterised in that** the optical module (26) is fitted such as to pivot around a vertical axis (P) between an inner end angular position and an outer end angular position, and **in that** a first shutter (44A) of the shield (38) is fitted such as to be fixed relative to the housing (22), and a second shutter (44B) of the shield (38) is fitted such as to be fixed relative to the dioptre (38), so that in the inner end position of the optical module (26), the shutters (44A, 44B) are in their shielding position, whereas between the outer end angular position and a functional intermediate angular position, the shutters (44A, 44B) of the shield (38) are in their open position.

10. Headlight (10) according to any one of the preceding claims, **characterised in that** the screen (38) is driven:
- into its open position when the optical module (26) is switched on, in order to obtain an integral lighting function; and
- to its shielding position, when the optical module (26) is switched on, in order to obtain a tactical lighting function.

11. Headlight (10) according to any one of claims 1 to 9, **characterised in that** the screen (38) is driven:
- into its open position when the optical module (26) is switched on, in order to obtain an integral lighting function; and
- to its shielding position, when the optical module (26) is switched on, in order to obtain a light signature which is delimited by a shielding edge (40) which delimits the shield (38) transversely.

12. Headlight (10) according to any one of claims 1 to 9, **characterised in that** the screen (38) is driven:
- into its open position when the optical module (26) is switched on, in order to obtain an integral lighting function; and
- to its shielding position, when the optical module (26) is switched on, in order to obtain a lighting function of the DRL type.
